# DEMANDE DE BREVET EUROPEEN

(11) **EP 2 596 925 A1**
(43) Date de publication de la demande: **29.05.2013**
(21) Numéro de dépôt: 11190074.2
(22) Date de dépôt: 22.11.2011
(51) Int. Cl.: B27D 1/00, B27M 1/04, B32B 37/14

(54) **Procede de fabrication d'une feuille de placage en bois, systeme de mise en oeuvre du procede, application a la fabrication d'element de type contreplaque ou lamelle- colle**

(71) Demandeur: Module 3D, 91140 Villebon sur Yvette (FR)
(72) Inventeur: Macquet, Gérard, 65100 LOURDES (FR)
(74) Mandataire: Fragnaud, Aude

(57) **Abrégé**

L'invention concerne un procédé de fabrication d'une feuille de placage en bois selon lequel on pratique des fentes dans les sens des fibres du bois sur une feuille de placage en bois de dimensions initiales données, et selon lequel on écarte les fentes dans une direction perpendiculaire au sens des fibres du bois, jusqu'à obtention de jours par déformation de cette feuille de placage et élongation dans la direction de l'écartement, la feuille se présentant alors sous forme d'une maille dont la longueur est de 2 à 50 fois supérieure à la longueur de la feuille initiale, et de préférence de 5 à 15 fois supérieure.

L'invention s'applique à la fabrication de panneaux contreplaqués ou lamellés-collés.

## Description

### Domaine de l'invention

L'invention concerne un procédé de fabrication d'une feuille de placage en bois. Elle concerne également un système de mise en oeuvre du procédé, l'application du procédé à la fabrication de contreplaqué ou de lamellé-collé.

L'invention s'applique plus particulièrement mais non exclusivement, à la réalisation d'éléments tels que des panneaux, des poutres, des tasseaux, des revêtements de murs ou de sols en contreplaqué utilisés notamment dans la construction d'habitations, dans la construction navale, la menuiserie, des habitacles ou revêtements pour des véhicules de transport (plancher, caisson), des emballages pour le transport de marchandises.

Pour éviter les problèmes liés aux propriétés mécaniques du bois, dues en particulier à sa structure anisotropique, il est connu d'utiliser des matériaux dérivés dont les plus connus sont les agglomérés, les contreplaqués et les lamellés-collés.

On s'intéresse ici plus particulièrement au domaine des matériaux de type contreplaqués dits «contreplaqués» ou lamellé-collé.

### Etat de la technique.

On rappelle que le contreplaqué est constitué de fines feuilles de bois découpées dans le sens tangentiel par déroulage d'une bille de bois ou tranchage à plat de bille ou de poutres. Les feuilles de placage en bois ainsi obtenues sont séchées, collées et pressées entre-elles. Les feuilles de placage sont également désignées par « plis » dans le domaine de la fabrication des contreplaqués. Le collage des feuilles est réalisé à fil croisé perpendiculairement les unes aux autres et le nombre de feuilles est généralement impair, afin d'obtenir une très bonne résistance mécanique.

Il est classique d'utiliser des feuilles en bois de nature différente et en particulier de placer une feuille de placage en bois tendre entre deux feuilles en bois dur disposées perpendiculairement. Ces deux feuilles peuvent être elles mêmes encadrées par deux autres feuilles en bois dur perpendiculaires. Les feuilles sont encollées sur chaque face, l'assemblage ainsi constitué est placé sous presse pour assurer un bon collage et une bonne planéité de l'ensemble.

Généralement on entend par feuilles en bois tendre, des feuilles en bois issu de résineux, alors que les feuilles en bois dur sont issues de bois de feuillus.

Le problème qu'a cherché à résoudre le Déposant est la mise au point d'un procédé de fabrication d'une feuille de placage permettant une économie de bois afin de contribuer à la protection de l'environnement et à une réduction des coûts. De plus, le Déposant a réalisé une feuille de placage en bois qui permet la fabrication d'un produit de type contreplaqué ou lamellé-collé amélioré, plus isolant, plus léger et qui présente une résistance mécanique similaire ou identique à celle d'un contreplaqué ou d'un lamellé collé classique du commerce.

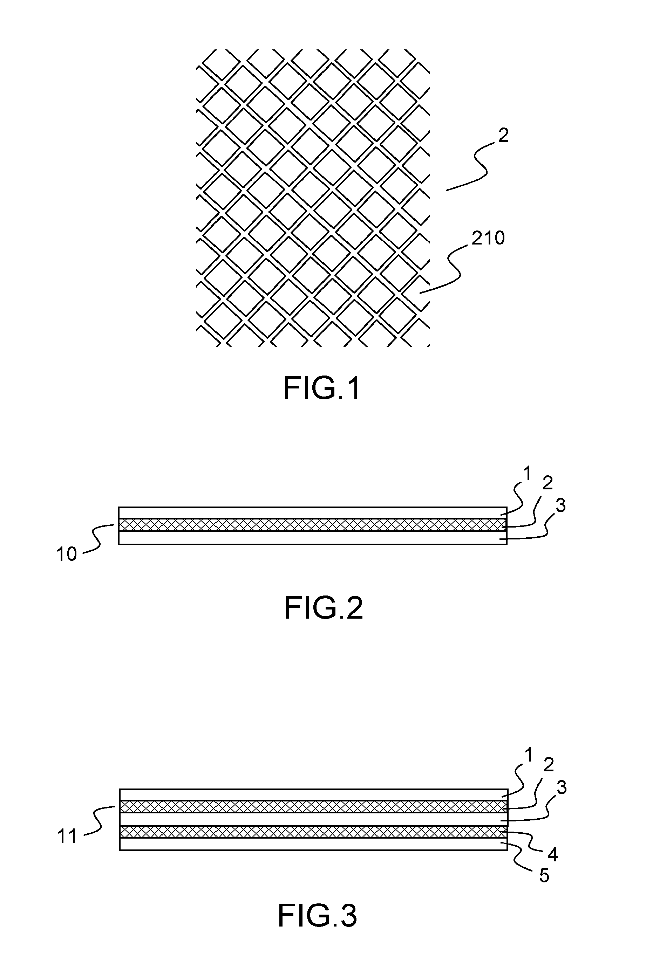

On connait du document D1 (US 2003/102052), un procédé de réalisation en continu de feuilles de placage 30. Certaines feuilles sont obtenues après découpages de fentes 30a. Les découpes de fentes réalisées dans les feuilles provoquent une expansion de la feuille. La forme expansée de la feuille, résulte de la formation d'ouvertures (page 4, paragraphe [0046]). L'expansion dépend de la forme des fentes obtenues par découpes. Dans le paragraphe [0047], il est décrit que la grandeur de l'expansion de la feuille est proportionnelle à la taille des ouvertures et que les ouvertures ont une forme de fentes allongées étroite à leurs extrémités et large dans la partie intermédiaire et avec des extrémités pointues de préférence. L'expansion de la feuille ne dépend que des découpes réalisée, illustrées par la figure 2.

Le problème que l'on a cherché à résoudre dans ce document est celui de mettre au point un procédé de fabrication de feuilles de plaquage continu. Ce document ne décrit pas et ne suggère pas une feuille de plaquage se présentant sous la forme d'une maille comme illustré par la figure 1 de la demande en objet, résultant de la réalisation de fentes et d'un écartement desdites fentes par étirement de la feuille tel que revendiqué dans la revendication 1. L'écartement des fentes opéré par un étirement de la feuille provoque une élongation de ladite feuille sans modifier pour autant son épaisseur. Le procédé permet ainsi, de réduire la quantité de bois utilisé dans la fabrication des feuilles de plaquage pour des dimensions données et corrélativement de fabriquer plus de feuilles de plaquage pour une quantité de bois donnée.

Ce document ne décrit pas et ne suggère pas à fortiori, un procédé permettant d'obtenir une feuille de placage se présentant sous la forme d'une maille, dont la longueur est de 2 à 50 fois supérieure à la longueur de la feuille initiale, et de préférence de 5 à 15 fois supérieure.

Ainsi, ce document ne décrit pas et ne suggère pas de réaliser un écartement des fentes pratiquées sur la feuille en opérant un étirement de la feuille.

On connait du document D2 (FR 2 421 695), un procédé pour réaliser des structures en treillis, les réalisations pratiques décrites ne concernent que du métal. Ce document décrit tout d'abord de réaliser des structures en treillis (page 1, ligne 5 à 10) consistant à réaliser une ébauche de treillis par déployage puis à réaliser un étirage des mailles de l'ébauche en exerçant une traction dans le plan de l'ébauche (page 2, lignes 3 à 10).

Ainsi, ce document décrit un procédé consistant à découper par cisaillement dans une plaque ou une feuille, des rangées parallèles de fentes, puis à déployer la structure par emboutissage perpendiculairement aux fentes, de façon à provoquer l'allongement des lanières réalisées entre les fentes, les lanières étant inclinées par rapport au plan de la structure et enfin à étirer les mailles de l'ébauche par traction dans le plan de l'ébauche. L'emboutissage permet d'ouvrir les fentes mais procure une déformation de la structure conduisant à une structure non plane comme on peut le voir sur les figures 3, 4 ou 7 et 8 de ce document. Une structure en métal déployé présente un relief.

Ce document ne décrit pas la réalisation d'une feuille de placage en bois. Le procédé décrit dans ce document, s'applique à la réalisation de treillis en métal ou plastiques mais ne peut en aucun cas être appliqué à du bois. Dans l'invention en objet, les fentes sont écartées par une opération d'étirement de la feuille et non par emboutissage, opération inadaptée au bois.

Ce document ne décrit pas et ne suggère pas un procédé permettant d'obtenir une feuille de placage en bois consistant à pratiquer des fentes dans la feuille puis à écarter les fentes en opérant un étirement de la feuille.

On connait du document D3 (US2009/0184504) l'utilisation d'une feuille en métal expansé pour la réalisation de filtres dans le domaine de l'automobile. La feuille en métal expansé est obtenue en opérant des perforations et en étirant le métal afin d'agrandir les perforations aux dimensions requises pour la réalisation des filtres. L'étirement provoque des ondulations du métal autour des perforations, la feuille ne reste pas plane, mais présente un relief.

Ce document ne concerne pas la fabrication d'une feuille de placage en bois. Il ne concerne pas non plus un procédé de fabrication de contreplaqué ou de lamellé collé comprenant une ou plusieurs feuilles de plaquage obtenues par le procédé.

Ce document ne décrit pas à fortiori, un procédé permettant d'obtenir une feuille de placage en bois consistant à pratiquer des fentes dans la feuille de placage en bois puis à écarter les fentes en opérant un étirement de la feuille jusqu'à obtention de jours par élongation de la feuille dans la direction de l' écartement.

De toute façon, on ne cherche pas dans ce document, à réaliser une feuille se présentant sous forme de maille, c'est-à-dire une feuille présentant des jours, dont la longueur après étirement est de 2 à 50 fois supérieure à la longueur de la feuille initiale sans amincissement de son épaisseur.

### Résumé de l'invention.

La présente invention a pour objet un procédé de fabrication d'une feuille de placage permettant une économie de bois contribuant ainsi la protection de l'environnement et à une réduction des coûts.

De plus, la feuille de placage en bois obtenue selon le procédé de l'invention permet la réalisation d'un produit de type contreplaqué ou lamellé-collé amélioré, plus isolant, plus léger et qui a une résistance mécanique similaire ou identique à celle d'un contreplaqué ou d'un lamellé collé classique.

Les produits, contreplaqués ou lamellés-collés réalisés ainsi, ont un coût de revient inférieur aux produits classiques car ce procédé de fabrication permet une économie de matière première à savoir de bois mais aussi de colle. De plus, le ou les produits ainsi réalisés sont respectueux de l'environnement du fait de l'économie de bois et de colle. L'économie réalisée sur le bois, rend les produits (contreplaqué ou lamellé-collé) plus légers.

A cette fin, l'invention a plus particulièrement pour objet un procédé de fabrication d'une feuille de placage en bois comprenant une étape consistant à pratiquer des fentes dans les sens des fibres du bois, sur une feuille de placage en bois de dimensions initiales données, caractérisé en ce qu'il comprend en outre une étape consistant à :
- écarter les fentes par étirement de la feuille dans une direction perpendiculaire au sens des fibres du bois, jusqu'à obtention de jours dus à l'élongation dans la direction de l'écartement, au moyen d'un dispositif d'étirement, afin que la feuille se présente sous forme d'une maille dont la longueur est de 2 à 50 fois supérieure à la longueur de la feuille initiale, et de préférence de 5 à 15 fois supérieure.

L'allongement de la feuille n'est dû qu'à l'écartement opéré sur les fentes.

Une feuille de format standard permet selon le procédé d'obtenir de 9 à 10 feuilles correspondant à ce format standard.

Les fentes sont réalisées régulièrement selon plusieurs lignes parallèles orientées dans le sens des fibres du bois.

Les fentes sont de préférence en quinconce, c'est-à-dire, décalées d'une ligne sur l'autre. Après écartement, les fentes ont une forme en losange ou en nid d'abeille, réalisant ainsi la maille. L'écartement des fentes provoque une déformation entraînant une élongation de la feuille de placage dans une direction perpendiculaire au sens des fibres.

De préférence la feuille est humidifiée ou mouillée avant la pratique des fentes ou juste après.

La feuille est séchée avant stockage ou utilisation.

Lorsque les feuilles de placage ainsi réalisées sont stockées, elles peuvent être stockées à plat ou enroulées comme un grillage.

Avantageusement, on choisi comme feuille de placage une feuille en bois tendre fibreux.

L'invention concerne également un système de mise en oeuvre du procédé comportant un dispositif de découpe comme un laser ou un support de lames, pour réaliser les fentes, et un dispositif d'étirement de feuille de placage.

Le support de lames comprend au moins deux rangées de lames, les lames sont décalées d'une rangée à l'autre, ledit support de lames étant apte à réaliser des entailles sous forme de fentes dans le sens des fibres du bois, sur la feuille de placage en bois tendre.

Selon un mode de réalisation, le système comporte deux rouleaux synchrones entraînant le défilement de la feuille, les fentes étant obtenues par passage de la feuille de placage de dimensions données entre les deux rouleaux, l'un des rouleaux comportant des lames et l'autre des gorges correspondantes orientées dans le sens des fibres du bois, de sorte que les lames entaillent la feuille de placage et forment des fentes sur cette feuille.

La feuille de placage est introduite entre les deux rouleaux de manière à ce que la direction des fibres du bois soit dans le même sens que les lames, les axes des rouleaux pouvant être l'un au dessus de l'autre ou côte à côte.

Selon un autre exemple de réalisation le système comporte un support de lames plan à translation verticale, muni d'une ou plusieurs rangées de lames orientées dans le sens des fibres du bois, apte à descendre au dessus de la feuille de placage et un plateau support pour la feuille de placage, de sorte qu'en position basse, le support de lames entaille la feuille de placage et forme des fentes sur cette feuille, le support de lames ou le support de la feuille de placage étant déplaçables horizontalement.

Pour réaliser l'écartement des fentes et obtenir ainsi des jours de taille désirée, on maintient la feuille de placage par un bord parallèle aux fentes et on introduit ladite feuille de placage maintenue par un bord dans un dispositif d'étirement.

Le dispositif d'étirement comprend avantageusement plusieurs jeux successifs de rouleaux d'entraînement, la feuille de placage étant introduite entre les rouleaux d'entraînement selon une direction perpendiculaire au sens des fibres et tendue par les jeux de rouleaux jusqu'à obtention de jours et de l'élongation désirée.

Dans un autre exemple avantageux de réalisation, le dispositif d'étirement comprend des agrafes disposées suivant l'axe des fentes, portées par des tringles placées sur des lignes correspondant aux axes longitudinaux des fentes, les agrafes étant par exemple disposées régulièrement le long de la tringle et fixées à cette dernière ou amovibles sur la tringle et pouvant glisser le long de ladite tringle.

L'invention concerne également l'application du procédé à la réalisation de produits de type contreplaqué ou lamellé-collé.

A cette fin, on encolle la feuille de placage sous forme d'une maille, de dimensions désirées, cette feuille ayant été découpée préalablement en plusieurs feuilles de placage aux dimensions désirées ;

On met en place la feuille encollée entre deux feuilles de placage en bois ou entre deux lamelles en bois ;

On renouvelle les étapes précédentes selon le nombre de couches désirées pour obtenir l'épaisseur désirée ;

On applique une pression sur l'ensemble formé.

Le contreplaqué ou le lamellé-collé réalisé comprend un assemblage de plusieurs feuilles de placage ou de lamelles collées entre-elles, comportant une ou plusieurs feuilles de placage en bois en forme de maille, assemblées ou en alternance avec les feuilles ou lamelles de l'ensemble.

Il peut être avantageux que deux ou plus, feuilles de placage sous forme de maille, soient collées l'une sur l'autre de manière à former un élément plus épais et plus résistant intercalé entre deux feuille ou lamelles de l'assemblage. Les feuilles en maille peuvent d'ailleurs être superposées tête-bêche pour augmenter cette résistance. Les jours des mailles sont de préférence en regard pour former des alvéoles plus volumineuses.

Les jours sont répartis régulièrement sur la feuille de sorte qu'ils forment, après assemblage des feuilles de placage ou de lamelles, une maille constituée d'alvéoles remplies d'air ambiant ou d'un gaz insufflé améliorant ainsi les propriétés d'isolation de l'assemblage en contreplaqué ou en lamellé-collé ainsi réalisé.

La présence d'une ou plusieurs feuilles de placage ajourées entre feuilles en bois plein dans le contreplaqué améliore son pouvoir d'isolant thermique.

Cet avantage est se retrouve également dans le cas d'un lamellé-collé.

Le bois utilisé est de préférence un bois fibreux et de préférence un bois tendre.

On entend par feuille de plaquage en bois de dimensions données, des feuilles de dimension standard telle qu'elles sont commercialisées à l'issue de leur fabrication. Ces feuilles peuvent se trouver sous forme de feuilles planes ou de rouleaux débités en feuilles dont la longueur, l'épaisseur et la largeur sont fixées par les normes existant pour la fabrication de feuilles de placage utilisées dans les procédés de fabrication de contreplaqués.

La mise en place d'une feuille de placage en bois tendre fibreux ajourée est réalisée par collage de ladite feuille de placage entre deux feuilles de placage.

Lorsque la réalisation du contreplaqué est consécutive à la fabrication de la feuille de placage sous forme d'une maille, l'encollage de cette dernière peut avoir lieu indifféremment avant l'opération d'écartement des fentes ou après écartement. Dans le cas où le dispositif d'étirement est constitué de rouleau d'entraînement, on préfère réaliser l'encollage des feuilles après étirement afin de ne pas encrasser les rouleaux.

### Description des dessins.

D'autres particularités et avantages de l'invention apparaîtront clairement à la lecture de la description qui est faite ci-après et qui est donnée à titre d'exemple illustratif et non limitatif et en regard des figures sur lesquelles :
- la figure 1, représente une feuille de placage sous forme de maille obtenue par le procédé selon l'invention,
- la figure 2, représente une vue en coupe d'un exemple de réalisation d'un contreplaqué 10 selon l'invention,
- la figure 3, représente une vue en coupe d'un exemple de réalisation d'un contreplaqué 11 selon l'invention,
- la figure 4, représente une feuille de placage en bois tendre fibreux comportant des fentes,
- la figure 5, représente une feuille de placage e en bois tendre fibreux comportant des fentes et des fentes étirées formant des jours,
- la figure 6, représente un premier exemple de dispositif pour pratiquer des fentes avec rouleaux d'entraînement,
- la figure 7 représente un détail de réalisation des rouleaux d'entraînement,
- la figure 8, représente un deuxième exemple de dispositif pour pratiquer des fentes avec rouleaux d'entraînement,
- la figure 9, représente un détail de réalisation des rouleaux d'entraînement selon la figure 8,
- la figure 10 représente un troisième exemple pour pratiquer des fentes avec un support de lame à déplacement vertical et plateau support de la feuille de placage,
- la figure 11 représente une vue de dessous du support de lame selon la figure 10,
- la figure 12, représente une vue de dessus du plateau support de la feuille,
- la figure 13 représente un exemple de réalisation du système d'étirement d'une feuille de placage en bois tendre fibreux munie de fentes.

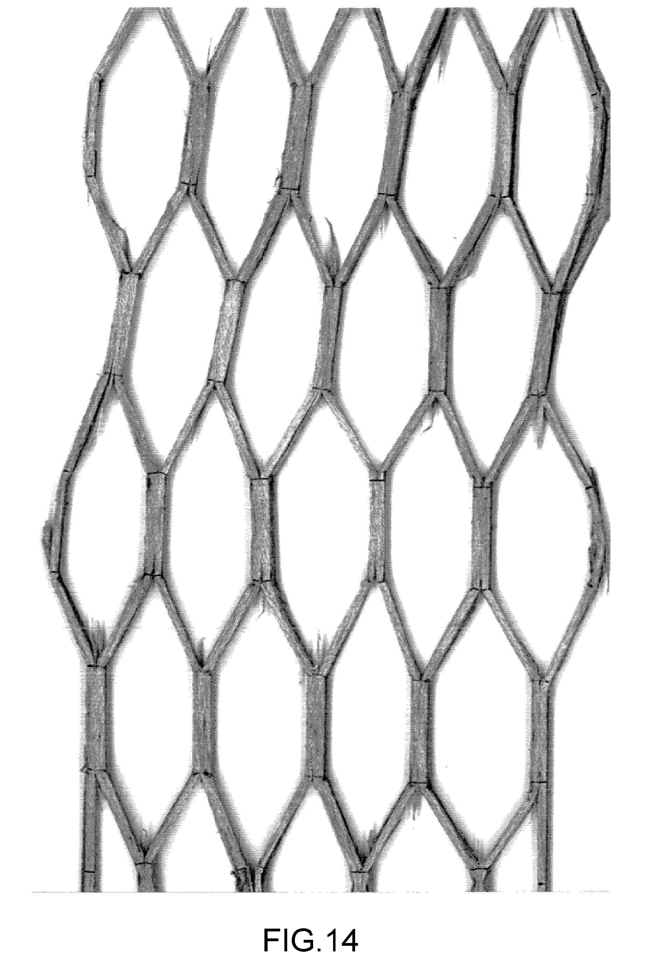

- la figure 14 représente une photo à l'échelle 1, d'un échantillon de feuille en maille réalisé selon le procédé de l'invention.
- la figure 15 représente le schéma d'une agrafe reliée à une tringle,
- la figure 16 représente le schéma d'une feuille avant étirement en vue de dessus avec un système d'étirement correspondant à un deuxième mode de réalisation.
- la figure 17 représente le schéma de la feuille représentée sur la figure 16 après étirement avec le système correspondant au deuxième mode d'étirement.

### Description détaillée.

La description détaillée qui suit est donnée à titre d'exemple pour la réalisation d'un contreplaqué et peut sans difficulté être transposée au lamellé-collé.

La figure 1 illustre une feuille de placage en bois obtenue selon le procédé de l'invention. La maille ainsi obtenue est avantageusement réalisée à partir d'une feuille en bois fibreux tendre.

Les figures 2 et 3 illustrent deux exemples d'ensemble formant des contreplaqués 10 ou 11, résultant de l'application du procédé de l'invention à la réalisation de tels contreplaqués.

Sur la figure 2, le contreplaqué a été réalisé en assemblant 3 feuilles de placage fines en bois dont deux, référence 1 et 3, sont en bois dur et une, référence 2, est en bois tendre fibreux placée entre les deux autres. L'assemblage est obtenu après les étapes d'encollage des feuilles, superposition, mise sous presse et séchage de sorte que le collage et la planéité répondent aux normes en vigueur.

Sur l'exemple illustré par la figure 3, le contreplaqué a été réalisé en assemblant 5 feuilles fines en bois, les deux feuilles de placage constituant les faces extérieures du contreplaqué sont en bois dur. Les feuilles de placage prises entre ces deux feuilles externes sont des feuilles de placage fines en bois tendre fibreux entre lesquelles, est placée une feuille de placage en bois dur. Bien entendu, il s'agit d'un exemple, et les trois feuilles prises entre les feuilles en bois dur peuvent être toutes les trois des feuilles de placage en bois tendre fibreux dont au moins une est réalisée sous forme d'un maillage selon la présente invention.

De manière classique, les feuilles de placage en bois peuvent au moment de la superposition être orientées perpendiculairement l'une de l'autre selon le sens des fibres ce qui améliore la résistance mécanique.

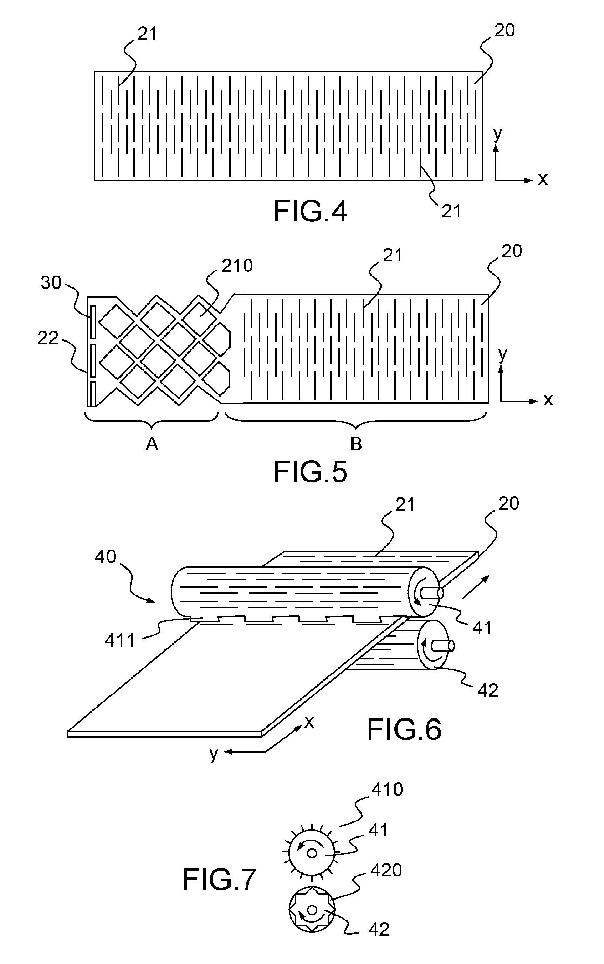

Les figures 4 et 5 permettent d'illustrer les étapes de réalisation d'une feuille de placage en bois 2, obtenue par le procédé de la présente invention.

La feuille 2 de placage en bois tendre et fibreux se présente sous forme d'un maillage 2 obtenu après avoir pratiqué des fentes 21 (ou entailles) réparties régulièrement sur une feuille de placage 20 de dimension standard et après avoir réalisé un étirement pour écarter les fentes 21. De préférence on aplanit la feuille par passage entre de rouleaux ou sous une presse.

Les fentes forment alors des jours 210 puis après découpage de la feuille de placage de dimension standard, on obtient plusieurs feuilles 2 de longueur désirée et dont l'épaisseur n'a changée lors de l'opération d'étirement. Ces feuilles ajourées se présentent sous forme d'une maille permettent de réaliser un assemblage en contreplaqué tel qu'illustré sur les figures 2 et 3. Plusieurs mailles peuvent être superposées et assemblées de manière à présenter un ensemble ayant une structure en nid d'abeille entre deux feuilles de placage en bois dur.

La figure 4 illustre une feuille de placage en bois tendre fibreux 20 de dimension standard après avoir pratiqué des fentes 21 dans le sens Y des fibres du bois.

La figure 5 illustre cette même feuille de placage 20 après avoir débuté l'étirement dans le sens perpendiculaire X aux fibres du bois. Une bordure 22 de la feuille de placage, parallèle au sens des fibres du bois maintient la feuille de placage 20. Ce maintien peut être fait en exerçant un pincement sur la bordure 22 pour retenir la feuille de placage ou de préférence comme cela est représenté sur cette figure en introduisant des ergots fixes 30 sur une première série de fentes. La zone A est étirée, la zone B n'a pas encore subi d'étirement. Les fentes se trouvant dans la zone A forment des jours 210 (ou ouvertures) de dimension désirée.

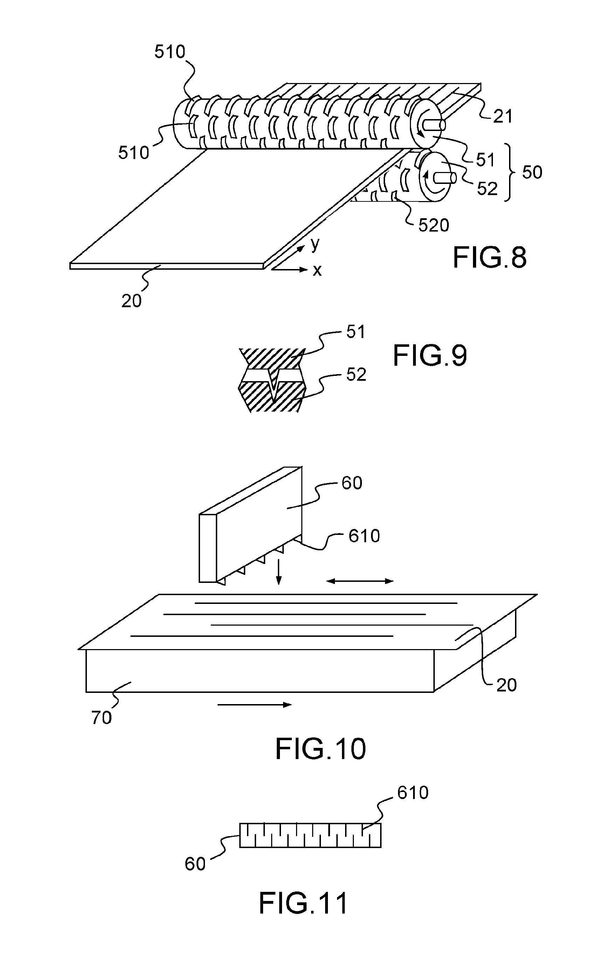

Les deux modes de réalisation qui suivent, illustrent un dispositif pour la réalisation des fentes sur une feuille de placage 20. Selon ces deux modes, le dispositif est réalisé par un ensemble de deux rouleaux d'entraînement entre lesquels on passe la feuille. Les deux rouleaux sont synchrones et entraînent le défilement de la feuille. La feuille de placage 20 peut être introduite verticalement entre les deux rouleaux placés côte à côte ou horizontalement, les rouleaux étant alors placés l'un au dessus de l'autre. Dans les exemples illustrés figure 6 et 8, les rouleaux sont représentés l'un au dessus de l'autre.

Les jeux de rouleaux d'entraînement sont fabriqués pour chaque version de maillage (dimensions des fentes).

La figure 6 illustre un exemple de dispositif 40 pour la réalisation des fentes sur une feuille de placage 20. Selon ce premier exemple, le dispositif permet de pratiquer des fentes aux moyen de deux rouleaux d'entraînement 41 et 42 disposés l'un au dessus de l'autre.

Cet exemple de réalisation permet d'entraîner la feuille suivant une direction perpendiculaire au sens des fibres du bois. En effet, l'entraînement de la feuille de placage est opéré suivant une direction X perpendiculaire au sens Y des fibres du bois. L'un des rouleaux d'entraînement 41 est muni de plusieurs rangées de lames 410 parallèles au sens des fibres de bois c'est-à-dire parallèle à la direction Y. Les lames 410 sont espacées de manière à permettre la réalisation de fentes selon le maillage désiré.

Le deuxième rouleau 42 d'entraînement comporte des gorges 420 parallèles à la direction Y, en vis-à-vis des rangées de lames 410 pour permettre à ces dernière de transpercer la feuille 20. Ainsi, lors du passage de la feuille de placage entre les deux rouleaux, les lames pénètrent dans le bois et transpercent la feuille de placage.

Le détail représenté sur la figure 7 permet d'illustrer la configuration des deux rouleaux d'entraînement 41 et 42.

La figure 8 illustre un deuxième exemple de dispositif 50 pour la réalisation des fentes sur une feuille de placage 20. Selon ce deuxième exemple, le dispositif permet de pratiquer des fentes aux moyen de deux rouleaux d'entraînement 51 et 52 disposés l'un au dessus de l'autre.

Cet exemple de réalisation permet d'entraîner la feuille suivant une direction parallèle au sens des fibres du bois. En effet, l'entraînement de la feuille de placage est opéré suivant une direction Y parallèle au sens X des fibres du bois. L'un des rouleaux d'entraînement 51 est muni de plusieurs rangées de lames 510 parallèles au sens des fibres de bois c'est-à-dire parallèle à la direction Y. Les lames 510 sont espacées de manière à permettre la réalisation de fentes selon le maillage désiré.

Le deuxième rouleau 52 d'entraînement comporte des gorges 520 parallèles à la direction Y, en vis-à-vis des rangées de lames 510 pour permettre à ces dernières de transpercer la feuille 20. Ainsi, lors du passage de la feuille de placage entre les deux rouleaux, les lames pénètrent dans le bois et transpercent la feuille de placage.

Le détail représenté sur la figure 9 permet d'illustrer la configuration des deux rouleaux d'entraînement 51 et 52.

Selon un autre exemple de réalisation illustré par le schéma de la figure 10, le dispositif de réalisation des fentes comprend un support 60 de lames motorisé pouvant se déplacer verticalement au dessus de la feuille de placage et un plateau support 70 de la feuille 20. La feuille de placage est posée sur ce support horizontal 70 dont la surface est munie de rainures 710 longitudinales parallèles aux lames 610 permettant à ces dernières de traverser la feuille de placage. Le support est muni d'une ou plusieurs rangées de lames 610 qui permettent de réaliser les fentes lorsque ce dernier est descendu au dessus de la feuille.

Pour réaliser des fentes sur toute la longueur de la feuille 20, le dispositif de réalisation des fentes peut comporter des moyens de déplacement horizontal du support de la feuille ou bien le dispositif comporte des moyens de déplacement horizontal du support de lames.

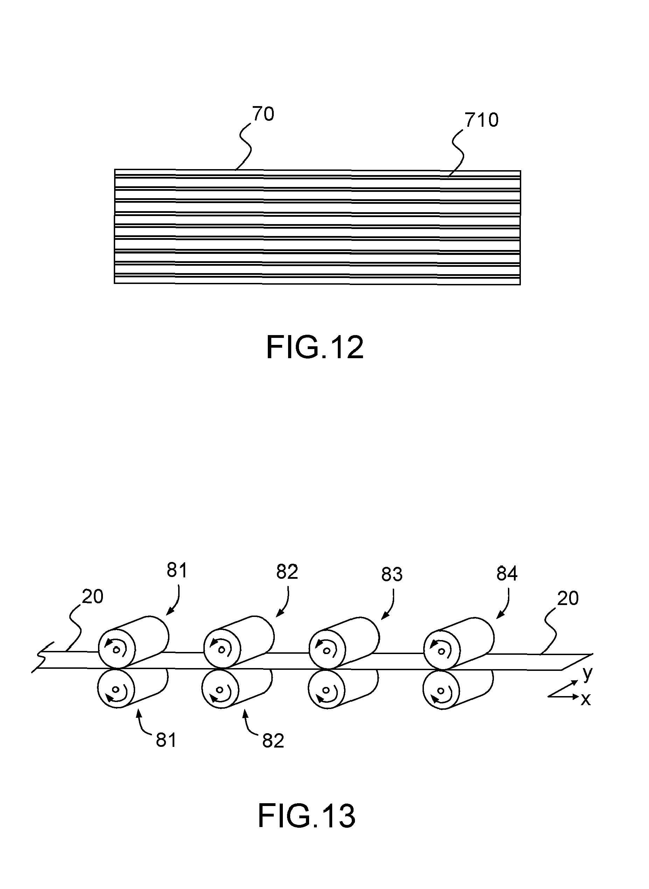

La figure 13 permet d'illustrer un premier exemple de réalisation de système d'étirement de la feuille de placage opérée après l'étape de réalisation des fentes 21.

Dans cet exemple de réalisation, le système d'étirement 8 comporte 4 jeux de deux rouleaux 81, 82, 83, 84.

L'étirement est réalisé par passage de la feuille 20 entre les jeux de rouleaux, la feuille étant retenue à une extrémité par l'un de ses bords au moyen d'agrafes 30. Plusieurs agrafes peuvent être placées sur les lignes correspondant à l'axe de découpe des fentes. De préférences, chaque ensemble d'agrafes posées sur une ligne, est portée par une barre sur laquelle, elles peuvent glisser.

La feuille de placage 20 est introduite selon une direction X perpendiculaire au sens Y des fibres et tendue par les jeux de rouleaux jusqu'à obtention de jours 210 et de l'élongation désirée. La feuille est également aplanie par les jeux de rouleaux.

Le bois mouillé étant plus souple, la feuille ajourée est avantageusement, obtenue avec des feuilles humides ou mouillées. Dans ce cas, on rajoute une étape pour humidifier la feuille avant la réalisation des fentes par exemple et une étape de séchage avant l'encollage par exemple.

Le système d'étirement comporte de préférence au minimum 4 jeux de 2 rouleaux, positionnés l'un au dessus de l'autre pour un bon écartement des fentes.

On utilisera plus de 4 jeux de rouleaux lorsque l'écartement des fentes pour obtenir une feuille ajourée est trop délicat par exemple lorsque le bois est très tendre ou que l'écartement des fentes est très important.

Les rouleaux permettent d'écarter la feuille maillée tout en la gardant bien à plat. La feuille maillée vrille naturellement pendant l'écartement. On veille à ce que la feuille maillée ne soit plus vrillée au moment de la mise sous presse.

Le premier jeu de 2 rouleaux 81 tourne à peine plus vite que le rouleau qui réalise les fentes. Sa fonction est d'écarter et de soulager les lames en train de fendre le bois ainsi que de protéger cette zone de l'accélération des rouleaux qui écartent les fentes. Le deuxième 82 et le quatrième 84 jeux de 2 rouleaux tournent à la même vitesse. Cette vitesse est calculée en fonction de la largeur de la maille finale à obtenir et de la fragilité du bois. Le troisième jeu de 2 rouleaux 83 tourne sensiblement plus vite que les jeux de rouleaux positionnés en deuxième et quatrième position. Cette vitesse sera calculée en fonction de la réaction de la fibre. Elle a pour but d'écarter la maille au maximum et de l'écraser afin de mettre la maille à plat. Le réglage idéal permet qu'en fin d'opération, la feuille sous forme de maille soit exactement à la dimension voulue et qu'elle ne se rétracte plus. La feuille maillée est entraînée dans un bain de colle tout en gardant l'écartement.

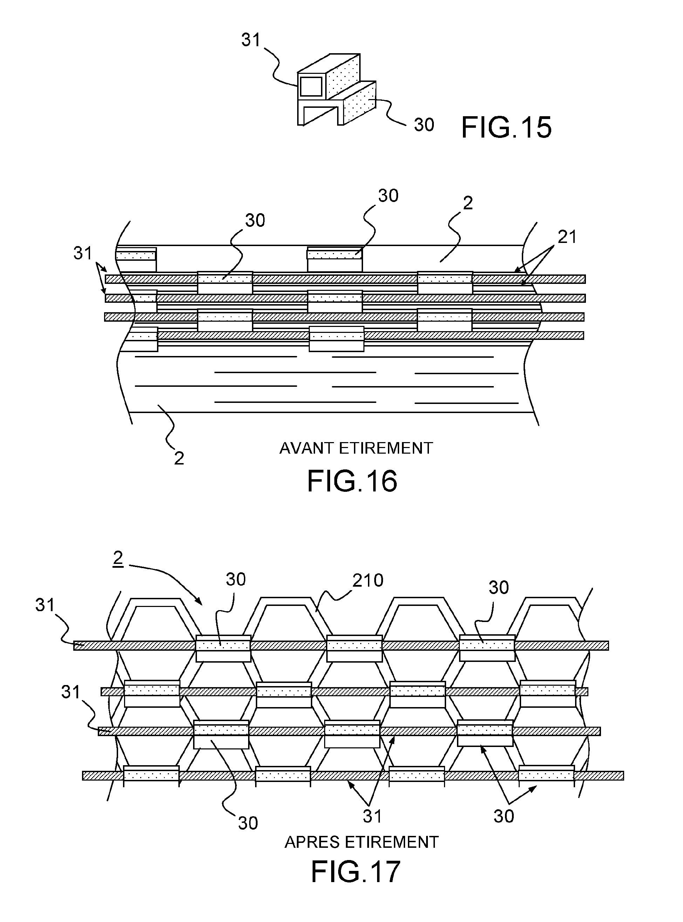

Les figures 15, 16 et 17 sont relatives à un deuxième mode de réalisation du système d'étirement.

Dans ce mode, la feuille 2 est maintenue par des agrafes 30 disposées suivant l'axe des fentes 21. Pour faciliter le maintien de la feuille et l'étirement des fentes, les agrafes 30 sont portées par des tringles 31 placées sur des lignes correspondant aux axes longitudinaux des fentes 21. Les agrafes 30 peuvent par exemple être disposées régulièrement le long de la tringle et fixées à cette dernière. Il peut être prévu également que les agrafes comportent un carré ou un anneau qui leur permet de glisser le long de la tringle et par conséquent d'être amovibles.

Lorsque la réalisation de contreplaqués est consécutive à la fabrication des mailles, la feuille sous forme de maille est encollée et est enfin déposée sur une feuille de placage en bois. Si la colle offre trop de résistance et déchire la feuille sous forme de maille ou la déforme de manière excessive, on préférera alors la pulvériser à la fois par-dessus et par-dessous.

Il est préférable d'inverser les étapes de collage et d'écartement des jours pour diminuer sensiblement la consommation de colle. Lorsque l'encollage est réalisé avant l'écartement, il faut impérativement que le système d'écartement des jours ne retire pas trop de colle et ne s'encrasse pas avec la colle.

Encollage pulvérisé :
La feuille sous forme de maille ainsi encollé et détendu à la largeur souhaitée est positionnée sur une feuille de bois dur ou fibreuse ou tous autres types de matériaux puis recouverte d'une feuille de bois dur ou fibreuse ou tout autre type de matériau. On multiplie les empilements de feuilles jusqu'à l'épaisseur souhaitée ou la résistance mécanique souhaitée. La régularité du maillage de la feuille, une fois déposée sur la feuille précédente est précise. Cette régularité est importante pour garantir l'homogénéité de la résistance thermique et mécanique de chaque assemblage fini.

Exemple de colles pour contreplaqué :
Suivant la résistance et la réponse aux normes que l'on souhaite donner au contreplaqué, on peut utiliser l'une des colles suivantes :
   Résines urée-formol (UF)
   Colles phénolformol (PF)
   Colles phénolformol/résorcinol-formol (PF/RF)
   Résines mélamine/urée (MF/UF)
   Résine mélaminé/urée-phénol (P/UF)
   Résine mélaminé/urée-résorcinol (F/MF)

On préfère la colle phénolique qui confère au contreplaqué les caractéristiques répondant aux spécifications de la norme CTB-X et au collage classe 3 (EN 314-2). La colle utilisée pour le contreplaqué a un pouvoir répulsif sur les micro-organismes, les insectes et résistant aux intempéries. Cette colle répond à la demande de respect de l'environnement, elle est donc considérée comme écologique.

On peut choisir parmi les colles aminoplastiques et phénoliques :

### 1) Colles aminoplastiques

Les essais ont établi que les résines urée-formol (UF) traditionnelles sont moins durables que les colles phénolformol (PF) ou PF/résorcinol-formol (PF/RF). En conclusion, quand on a besoin de contreplaqué durable, les colles UF ne sont tout à fait adaptées que pour des applications intérieures peu menacées, mais peuvent être acceptables pour une brève exposition à des conditions plus difficiles.

Les résultats ont été meilleurs en extérieur et en intérieur peu menacé, avec des résines mélamine/urée (MF/UF) et des formules enrichies, par exemple, au phénol ou au résorcinol (P/UF et F/MF). Les essais en extérieur ont montré que les colles P/UF testées pouvaient conserver une adhérence satisfaisante aussi longtemps que les résines de mélamine (4 à 6 ans), et que la résine de mélamine simple enrichie qui a été testée la conservait pendant au moins dix ans. La longévité de ces colles permet d'utiliser les contreplaqués dans des conditions plus difficiles - par exemple, dans des hangars ou terrasses à claire-voie, des blanchisseries et sous les toits dans le bâtiment.

### 2) Colles phénoliques

On a constaté que les colles PF ou PF/RF conçues pour être utilisées sans charges ou allonges ou avec seulement un faible pourcentage de charges conservent une adhérence efficace pendant longtemps. L'emploi des contreplaqués fabriqués avec ces colles est recommandé dans les milieux très difficiles, où les autres colles n'auraient qu'une application limitée.

On incorpore des charges - par exemple, poudres ou fibres minérales - aux colles pour en modifier certaines propriétés telles que le retrait et la viscosité; ce qui permet habituellement de réduire le coût de l'ensemble. Il est évident que l'effet de ces matériaux varie selon la nature et la quantité de la charge utilisée. En général, l'adhérence disparaît rapidement si la teneur en charge est élevée, et lorsque celle-ci a dépassé 103 pour cent (résine sèche), elle devient très mauvaise.

L'assemblage obtenu passe sous une presse à haute température. La pression est d'environ: 0,8 à 1 MPa et la température d'environ : 120°C.

Le gaz emprisonné dans les alvéoles de la maille, crées après mise en place de la feuille entre deux autres feuilles n'est pas impérativement de l'air ambiant, il peut s'agir du gaz neutre insufflé.

Dans un exemple de réalisation pratique on a réalisé des fentes de longueur 6 cm, dont l'espacement dans le sens de la longueur est de préférence 0,5 et dont l'espacement d'une rangée à l'autre est de préférence 1 mm afin d'obtenir un coefficient d'extension de 9.

Une feuille de format standard permet selon le procédé d'obtenir de 9 à 10 feuilles correspondant à ce format standard.

## Revendications

1. Procédé de fabrication d'une feuille de placage en bois comprenant une étape consistant à pratiquer des fentes dans les sens des fibres du bois, sur une feuille de placage en bois de dimensions initiales données, **caractérisé en ce qu'**il comprend en outre une étape consistant à :
- écarter les fentes par étirement de la feuille dans une direction perpendiculaire au sens des fibres du bois, jusqu'à obtention de jours dus à l'élongation dans la direction de l'écartement, au moyen d'un dispositif d'étirement, afin que la feuille se présente sous forme d'une maille dont la longueur est de 2 à 50 fois supérieure à la longueur de la feuille initiale, et de préférence de 5 à 15 fois supérieure.

2. Procédé de fabrication selon la revendication 1, **caractérisé en ce que** les fentes sont réalisées régulièrement selon plusieurs lignes parallèles orientées dans le sens des fibres du bois et sont décalés d'une ligne sur l'autre et après écartement, ont une forme de losange ou de nid d'abeille réalisant ainsi la maille, l'écartement des fentes provocant une déformation entraînant une élongation de la feuille de placage dans une direction perpendiculaire au sens des fibres.

3. Procédé de fabrication selon l'une quelconque des revendications précédentes, **caractérisé en ce que** la feuille est humidifiée ou mouillée avant la pratique des fentes ou juste après et **en ce que** la feuille est séchée avant son utilisation ou stockage à plat ou enroulées comme un grillage.

4. Procédé de fabrication selon l'une quelconque des revendications 1 à 3, **caractérisé en ce que** l'on choisit des feuilles en bois tendre fibreux.

5. Procédé de fabrication d'une feuille de placage en bois selon la revendication 1, **caractérisé en ce qu'**il consiste à maintenir la feuille de placage par un bord parallèle aux fentes, au moyen d'agrafes (30) disposées suivant l'axe des fentes (21), lesdites agrafes étant portées par des tringles (31) placées sur des lignes correspondant aux axes longitudinaux des fentes (21), et disposées régulièrement le long des tringles (31), les agrafes étant fixées à ces dernières ou amovibles de manière à pouvoir glisser le long desdites tringles.

6. Système de mise en oeuvre du procédé de fabrication selon l'une quelconques des revendications 1 à 5, **caractérisé en ce qu'**il comporte un dispositif de découpe comme un laser ou un support de lames (41 ; 51 ; 60) pour réaliser les fentes, et le dispositif d'étirement (81, 82 ; 83 ; ou 30, 31) de feuille de placage.

7. Système de mise en oeuvre du procédé de fabrication selon la revendication 6, **caractérisé en ce que** le support de lames comprend au moins deux rangées de lames, les lames (410 ; 510 ; 610) sont décalées d'une rangée à l'autre, ledit support de lames étant apte à réaliser des entailles sous forme de fentes dans le sens des fibres du bois, sur la feuille de placage en bois tendre

8. Système de mise en oeuvre du procédé de fabrication selon la revendication 7, **caractérisé en ce que** le système comporte deux rouleaux synchrones (41, 42 ; 51 ,52) entraînant le défilement de la feuille, les fentes étant obtenues par passage de la feuille de placage en bois de dimensions données entre les deux rouleaux, l'un des rouleaux comportant des lames et l'autre des gorges correspondantes orientées dans le sens des fibres du bois, de sorte que les lames entaillent la feuille de placage et forment des fentes sur cette feuille.

9. Système de mise en oeuvre du procédé de fabrication selon la revendication 8, **caractérisé en ce que** la feuille de placage est introduite entre les deux rouleaux de manière à ce que la direction des fibres du bois soit dans le même sens que les lames, les axes des rouleaux pouvant être l'un au dessus de l'autre ou côte à côte.

10. Système de mise en oeuvre du procédé de fabrication selon la revendication 7, **caractérisé en ce que** le système comporte un support de lames plan (610) à translation verticale, muni d'une ou plusieurs rangées de lames orientées dans le sens des fibres du bois, apte à descendre au dessus de la feuille de placage et un plateau support pour la feuille de placage, de sorte qu'en position basse, le support de lames entaille la feuille de placage et forme des fentes sur cette feuille, le support de lames ou le support de la feuille de placage étant déplaçables horizontalement.

11. Système de mise en oeuvre du procédé de fabrication selon l'une quelconque des revendications 7 à 10, **caractérisé en ce que** pour réaliser l'écartement des fentes et obtenir ainsi des jours de taille désirée, on maintient la feuille de placage par un bord parallèle aux fentes et on introduit ladite feuille de placage maintenue par un bord dans le dispositif d'étirement et **en ce que** le dispositif d'étirement comprend des agrafes (30) disposées suivant l'axe des fentes (21), portées par des tringles (31) placées sur des lignes correspondant aux axes longitudinaux des fentes (21), les agrafes (30) étant par exemple disposées régulièrement le long de la tringle et fixées à cette dernière ou amovibles sur la tringle et pouvant glisser le long de ladite tringle.

12. Système de mise en oeuvre du procédé de fabrication selon l'une quelconque des revendications 7 à 11, **caractérisé en ce que** le dispositif d'étirement comprend au minimum quatre jeux successifs de rouleaux d'entraînement (81,...,84), chaque jeu comportant deux rouleaux superposés entre lesquels passe la feuille de placage, les jeux de rouleaux positionnés en deuxième et quatrième position tournent à la même vitesse et le jeux positionné en troisième position tourne sensiblement plus vite afin d'écarter les mailles, la feuille de placage étant introduite entre les rouleaux d'entraînement selon une direction perpendiculaire au sens des fibres et tendue par les jeux de rouleaux jusqu'à obtention de jours et de l'élongation désirée.

13. Procédé de réalisation d'un produit contreplaqué ou lamellé-collé comprenant une ou plusieurs feuilles de plaquage obtenue(s) par le procédé de fabrication selon l'une quelconque des revendications 1 à 6 à, **caractérisé en ce qu'**il comprend :
1) l'encollage d'une feuille de placage sous forme d'une maille, de dimensions désirées, la feuille de placage initiale ayant été découpée préalablement en plusieurs feuilles de placage aux dimensions désirées,
2) la mise en place de la feuille encollée entre deux feuilles de placage en bois ou entre deux lamelles de bois,
3) le renouvellement des étapes 1 et 2 selon le nombre de couches désirées pour obtenir l'épaisseur désirée,
4) l'application d'une pression sur l'ensemble formé.

14. Contreplaqué ou lamellé-collé réalisé par le procédé de la revendication 15, **caractérisé en ce qu'**il comprend un assemblage de plusieurs feuilles de placage collées entre-elles, ou de lamelles collées entre-elles, comportant une ou plusieurs feuilles de placage en bois en forme de maille, assemblées ou en alternance avec les feuilles ou lamelles de l'ensemble.

15. Contreplaqué ou lamellé-collé selon la revendication 14, **caractérisé en ce qu'**il comprend un gaz, comme de l'air ou un gaz neutre emprisonné dans les alvéoles obtenues à partir de la ou des feuille(s) sous forme de maille lors de la mise en place de ladite ou desdites feuille(s) entre deux autres feuilles de placage.
